# EUROPÄISCHE PATENTSCHRIFT

(11) **EP 2 070 680 B1**
(45) Veröffentlichungstag und Bekanntmachung des Hinweises auf die Patenterteilung: **09.03.2011**
(21) Anmeldenummer: 07024064.3
(22) Anmeldetag: 12.12.2007
(51) Int. Cl.: B29C 45/14, B29C 45/16, B29L 31/58, B60R 13/02

(54) **Verfahren und Vorrichtung zur Herstellung eines Formteils mit mehreren aneinandergrenzenden, unterschiedlichen Dekorbereichen**
Method and device for manufacturing a moulded part with several different adjoining decorative areas
Dispositif et procédé destinés à la fabrication d'une pièce moulée dotée de plusieurs zones de décoration adjacentes différentes

(43) Veröffentlichungstag der Anmeldung: 17.06.2009
(73) Patentinhaber: PEGUFORM GMBH, 79268 Bötzingen (DE)
(72) Erfinder: Buchet, Yann, 67000 Strasbourg (FR)
(74) Vertreter: Neunert, Peter Andreas

(56) Entgegenhaltungen:
- DE-A1- 19 825 844
- JP-A- 2001 138 356
- JP-A- 2003 011 166
- JP-A- 2003 305 726
- US-A1- 2007 057 401

## Beschreibung

Die vorliegende Erfindung betrifft ein Verfahren zur Herstellung eines Formteils mit mehreren aneinandergrenzenden, unterschiedlichen Dekorbereichen durch Hinterformen mehrerer in ein einen Kern und eine Matrize umfassendes Formwerkzeug eingelegten Dekorfolien. Die Erfindung betrifft auch ein Formwerkzeug zur Herstellung eines Formteils mit mehreren aneinandergrenzenden Dekorbereichen.

Es ist bekannt, bestimmte Bereiche von Formteilen für Innenverkleidungen von Kraftfahrzeugen mit Gewebematerialien, Kunststoff-Folien, Filz oder Teppichmaterialen, Leder oder auch Lederimitaten als Dekor zu veredeln. Dabei können den Dekorbereichen neben den besonderen optischen und haptischen Eigenschaften noch technische Funktionen zukommen. Üblicherweise werden zur Herstellung von Formteilen mit integrierten Dekorbereichen entsprechende Gewebe oder Dekorfolien in ein Formwerkzeug eingelegt und anschließend mit thermoplastischem Kunststoff hinterformt. Der Randbereich des Dekorelementes wird üblicherweise in einem separaten Arbeitsgang vor der endgültigen Fertigstellung des Formteils bearbeitet.

Um ein Formteil mit unterschiedlichen Oberflächenstrukturen oder Dekorbereichen zu versehen, werden häufig zwei oder mehrere separate Teile mit unterschiedlichen Oberflächenstrukturen in unterschiedlichen Werkzeugen als Halbzeug vorgefertigt und anschließend miteinander verbunden bzw. verklebt. Diese Vorgehensweise hat den Nachteil, dass mehrere Verarbeitungsschritte sowie Transportvorgänge für die entsprechenden Halbzeuge durchgeführt und miteinander koordiniert werden müssen, was mit einem beträchtlichen Zeit- und fertigungstechnischen Aufwand verbunden ist.

In der EP 1 655 122 A1 wird ein Verfahren zur Herstellung von Kunststoff-Formteilen beschrieben, bei dem in einem ersten Fertigungsschritt ein erstes Gewebe bzw. eine Dekorfolie in ein Formwerkzeug eingelegt und hinterspritzt wird und anschließend ein Teilstück aus dem so hergestellten Halbzeug ausgestanzt wird. In einem zweiten Schritt wird dann ein zweites Gewebe bzw. eine zweite Dekorfolie an Stelle des entfernten Teils des Halbzeugs eingelegt und das Halbzeug wird dann im Bereich des zweiten Gewebes bzw. der zweiten Folie ebenfalls hinterformt. Ein Nachteil dieses Verfahrens ist darin zu sehen, dass auch hier mehrere Arbeitsschritte erforderlich sind, um zu einem Formteil mit unterschiedlichen Dekorbereichen zu kommen. Dabei ist insbesondere das Herausschneiden als zusätzlicher Arbeitsschritt nicht nur zeit- und kostenaufwändig, sondern erfordert auch ein entsprechendes zusätzliches Werkzeug. In der EP 1 655 122 A1 wird als eine bevorzugte Ausführungsform ein Verfahren ohne Werkzeugwechsel beschrieben. Dies erfordert einen direkten Eingriff des Stanzwerkzeugs in das Formwerkzeug, wobei eine Beschädigung des Formwerkzeugs befürchtet werden muss.

Bei nahezu allen bekannten und praktizierten Verfahren zur Herstellung von Formteilen mit Dekorbereichen für Kraftfahrzeuginnenverkleidungen ist es üblich, dass entweder während der Fertigung des Formteils oder spätestens nach seiner Fertigstellung ein Beschneiden des Rands des Dekorbereichs durchzuführen ist, um einen passgenauen und optisch einwandfreien Sitz des Dekorelements im Formteil zu erreichen. Eine saubere und optisch makellose Gestaltung des Randbereiches des Dekors ist allgemein eines der Probleme bei der Herstellung von Formteilen mit integrierten Dekorbereichen für Kraftfahrzeuginnenverkleidungen.

In der Offenlegungsschrift DE 10 2005 029 849 A1 wird ein Verfahren zur Herstellung eines Verbundelementes für die Fahrzeugkarosserie beschrieben, wobei mindestens zwei flächige Teile einer Außenhaut nebeneinander in ein gemeinsames Werkzeug eingelegt und in dem Werkzeug über ihre gesamte Fläche mit einer gemeinsamen Trägerstruktur versehen werden. Bei dem Verfahren ist vorgesehen, Teile der Außenhaut als separate Teile in das Werkzeug einzulegen, wobei benachbarte Teile der Außenhaut am Rand dichtend überlappen. Der Nachteil dieses Verfahrens besteht darin, dass der Übergangsbereich zwischen den einzelnen unterschiedlichen Flächen eine starke optische Abgrenzung zwischen den Flächen aufweist. Dieses Verfahren ist daher lediglich für die Herstellung von Karosserieelementen im Außenbereich geeignet, wo derartige Übergänge gewollt sind oder durch entsprechende Maßnahmen, wie z. B. das Anbringen einer Leiste, kaschiert werden können. Für die Herstellung von Formteilen mit unterschiedlichen Dekorbereichen für die Innenverkleidung von Kraftfahrzeugen, insbesondere Instrumententafeln, Seitenverkleidungen oder Türverkleidungen, ist das in dem Dokument beschriebene Verfahren nicht geeignet.

In der DE 103 20 210 A1 werden Innenverkleidungsteile mit Dekorelementen beschrieben, bei denen der Randbereich des Dekorelementes umlaufend durch einen Dekoraussparungsrand bedeckt wird, wobei eine flächige Anlageverbindung zwischen Dekorelement, Randbereich und Dekoraussparungsrand realisiert wird. Hier hat man die Problematik eines unregelmäßigen Fugenbildes entlang des Randbereiches des Dekorelementes zwar ohne zusätzliches Beschneiden der Dekorfolien gelöst, jedoch kann ein exakter Fugen- bzw. Kantenverlauf zwischen Dekorelement und Verkleidungsteil nur dadurch erreicht werden, dass eine Vielzahl unterschiedlicher Bauteile miteinander verklebt bzw. kombiniert werden, was entsprechend aufwändig ist.

Die JP 2003 011 166 A beschreibt ein Formwerkzeug zur Herstellung von Formteilen mit mehreren aneinandergrenzenden, unterschiedlichen Dekorbereichen und ein Verfahren nach dem Oberbegriff des Anspruchs 1.

Es besteht somit weiterhin das Problem, ein Verfahren zur Herstellung von Formteilen mit mehreren aneinandergrenzenden, unterschiedlichen Dekorbereichen für Innenverkleidungen von Kraftfahrzeugen zu finden, mit dessen Hilfe es gelingt, die Dekorbereiche so in das Formteil einzufügen, dass keine zusätzlichen Maßnahmen, wie z. B. ein nachträgliches Schneiden oder Abdecken des Randbereiches, erforderlich sind, um einen sauberen, fugengenauen und optisch einwandfreien Übergang zwischen den einzelnen Dekorbereichen zu erhalten.

Gelöst wird die Aufgabe durch ein Verfahren mit den Merkmalen des Anspruchs 1 sowie eine Vorrichtung mit den Merkmalen des Anspruchs 14. Bevorzugte Ausführungsformen des erfindungsgemäßen Verfahrens sowie der erfindungsgemäßen Vorrichtung sind in den jeweiligen Unteransprüchen wiedergegeben.

Mit Hilfe eines Formwerkzeugs, das im Wesentlichen aus einem Formwerkzeugkern und einer Formwerkzeugmatrize besteht, wobei der Formwerkzeugkern mehrere durch mindestens einen im Formwerkzeugkern integrierten Schieber voneinander getrennte Teilbereiche aufweist, die für die Ausbildung der jeweils unterschiedlichen Dekorbereiche vorgesehen sind, gelingt es, Kunststoff-Formteile mit unterschiedlichen Dekorbereichen herzustellen und dabei ein Nacharbeiten oder zusätzliches Überdecken des Randbereiches des Dekorelements bzw. der Dekorelemente zu vermeiden.

Während des Formgebungsprozesses kann der die Teilbereiche voneinander trennende Schieber unterschiedliche Positionen ein einnehmen, wobei er zwischen einer vollständig im Kern eingeführten und einer außerhalb des Kerns liegenden Position verschoben werden kann. Im geöffneten Zustand des Formwerkzeuges nimmt der Schieber eine außerhalb des Kernes angeordnete Position ein und ragt dabei so weit über die Oberfläche des Kernes hinaus, dass zwischen den jeweiligen Teilbereichen des Kernes und dem Schieber ausreichend Platz vorhanden ist, um auf beide Seiten des Schiebers jeweils eine Dekorfolie zwischen Kern und Schieber einzulegen.

Der Schieber hat die Funktion, die Dekorfolien in Richtung Kern zu transportieren und dort für das Hinterformen zu positionieren. Dazu besitzt er bei einer vorteilhaften Ausgestaltung eine flach ausgebildete, zum Kern weisende, vorzugsweise relativ breite Rückseite, die zur Mitnahme der Dekorfolie vorgesehen ist. In diesem Fall ragt der Schieber im geöffneten Zustand des Werkzeugs vollständig über die Oberfläche des Kerns hinaus und kann beim Schließen des Werkzeugs eine zwischen Kern und Schieberrückseite positionierte Dekorfolie mitnehmen.

Bei einer weiteren vorteilhaften Ausgestaltung besitzt der Schieber ein- oder beidseitig eine seitliche Aussparung, die für das Einlegen und die Mitnahme der Dekorfolie vorgesehen ist. In dem Fall reicht es aus, wenn der Schieber beim Öffnen des Werkzeugs so weit aus der Oberfläche des Kerns herausragt, dass ein Einlegen der Dekorfolie in die jeweilige seitliche Aussparung des Schiebers möglich ist.

Die in Richtung Matrize zeigende Vorderseite des Schiebers weist vorzugsweise eine abgeflachte Vorderkante auf, die zum Verbindungsschluss mit der Matrize vorgesehen ist.

In den einzelnen Teilbereichen des Formwerkzeugkernes können zusätzliche Spannflächen zur Fixierung der jeweiligen Dekorfolien vorgesehen sein. Diese Spannflächen sind vorzugsweise beweglich im Kern angeordnet und ragen beim Einlegen der Dekorfolie über die Kernoberfläche hinaus. Zum Einspannen der Dekorfolien auf den Spannflächen werden Hilfsmittel, wie z. B. Nadeln, eingesetzt, die verhindern, dass die Dekorfolie beim Schließen des Werkzeuges verrutscht. Die Spannfläche ist beim Einlegen der Dekorfolie in das Werkzeug zwischen dem Schieber und der Oberfläche des Kernes positioniert.

Eine besonders vorteilhafte Ausgestaltung der erfindungsgemäßen Vorrichtung sieht vor, dass korrespondierend zum Schieber auf der Matrize Stege angeordnet sind, die beim Schließen des Werkzeuges mit dem Schieber einen Formschluss bilden. Durch diesen Formschluss wird die zwischen Matrize und Kern ausgebildete Kavität in Teilkavitäten unterteilt wird, die seitlich vom Schieber und dem korrespondierenden Steg begrenzt sind.

Bei einer weiteren vorteilhaften Ausgestaltung des erfindungsgemäßen Formwerkzeugs ist vorgesehen, dass mindestens einer der für die Ausbildung eines Dekors vorgesehenen Teilbereiche des Formwerkzeugkernes an seinem Rand umlaufend eine Aussparung aufweist. Diese Anordnung führt dazu, dass zwischen Schieber und Kern bei geschlossenem Werkzeug eine Nut ausgebildet wird, in die der Rand der jeweiligen Dekorfolie beim Schließen des Werkzeuges eingeführt werden kann.

Ein wesentliches Merkmal der erfindungsgemäßen Vorrichtung besteht weiterhin darin, dass der Schieber, der beim Hinterformen eines ersten Dekorbereiches zumindest teilweise als seitliche Begrenzung der entsprechenden Teilkavität dient, nach dem Hinterformen des ersten Teilbereiches weiter in den Kern hineingeschoben werden kann, womit die Trennung zwischen den Kavitäten bzw. zwischen dem hinterformten Dekorbereich und einer weiteren Teilkavität wegfällt und beim Hinterformen der zweiten Kavität gleichzeitig die beiden dann hinterformten Bereiche zu einem einzigen Formteil miteinander verbunden werden.

Im Folgenden werden vorteilhafte Ausführungsformen des erfindungsgemäßen Verfahrens ausführlich beschrieben.

Der erste Schritt einer bevorzugten Ausführungsform des erfindungsgemäßen Verfahrens, wobei die Rückseiten des Schiebers als Mittel zur Mitnahme der Dekorfolien vorgesehen sind, besteht darin, die jeweiligen Dekorfolien bei geöffnetem Formwerkzeug zwischen den jeweiligen benachbarten Teilbereichen des Kernes und den beiden Rückseiten des aus dem Kern hervorstehenden Schiebers einzulegen. Dabei können bei einer weiteren vorteilhaften Variante der Erfindung die Dekorfolien zusätzlich auf einer Spannfläche fixiert werden, die jeweils innerhalb des Teilbereichs des Kernes angeordnet ist und dabei leicht über der Kernoberfläche hinaussteht. Die Fixierung der Dekorfolie auf der Spannfläche kann mit Hilfe von Nadeln oder ähnlichen Hilfsmitteln vorgenommen werden.

Im nächsten Verfahrensschritt ist vorgesehen, dass die Dekorfolien mit Hilfe des im Kern integrierten, bei geöffnetem Formwerkzeug über die Oberfläche des Formwerkzeugkerns herausragenden und dabei die unterschiedlichen Dekorbereiche trennenden Schiebers in Spritzposition gebracht werden. Gleichzeitig oder nachfolgend wird dabei das Formwerkzeug geschlossen und durch den Formschluss zwischen Matrize und Schieber werden separate Kavitäten zwischen Kern und Matrize für die unterschiedlichen Dekorbereiche ausgebildet. Wie bereits oben angedeutet, kann das Verschieben des Schiebers in Richtung Kern separat erfolgen oder aber der Schieber wird durch die Matrize beim Schließen des Werkzeuges mitgeführt.

Im geschlossenen Werkzeug sind nun mindestens zwei separate Kavitäten ausgebildet, die durch einen Schieber voneinander getrennt sind und in die jeweils unterschiedliche Dekorfolien eingelegt sind.

Im nächsten Schritt wird nun die erste Dekorfolie in der ersten Kavität kernseitig mit einem thermoplastischen Kunststoff hinterformt. Nach dem Erstarren des frisch hinterformten ersten Dekorbereiches wird der Schieber vollständig in den Kern zurückgeschoben, womit die Trennung zwischen den einzelnen Kavitäten bzw. zwischen dem ersten hinterformten Dekorbereich und der zweiten Kavität aufgehoben wird, und das Verfahren wird so weitergeführt, dass beim anschließenden Hinterformen der zweiten Dekorfolie mit dem thermoplastischen Kunststoff gleichzeitig eine Verbindung mit dem ersten hinterformten Bereich erhalten wird. Diese Verbindungsbildung kann dadurch erleichtert werden, dass der zweite Formgebungsschritt bereits dann durchgeführt wird, wenn das thermoplastische Material des ersten Dekorbereiches noch nicht vollständig erkaltet ist.

Eine bevorzugte Ausführungsform des erfindungsgemäßen Verfahrens sieht vor, dass die einzelnen Teilbereiche des Kernes, die mit dem Schieber voneinander getrennt werden, an ihrem Randbereich jeweils eine Aussparung aufweisen, sodass im geschlossenen Werkzeug zwischen Schieber und Kern bzw. dem jeweiligen Teilbereich des Kerns eine Nut ausgebildet wird, in die der Schieber den Rand der Dekorfolie beim Positionieren der Dekorfolie in der jeweiligen Kavität einführt.

Diese Nut erleichtert die Positionierung der Dekorfolie in der jeweiligen Kavität, ist jedoch für die Durchführung des erfindungsgemäßen Verfahrens nicht unbedingt erforderlich. So kann das erfindungsgemäße Verfahren gleichermaßen durchgeführt werden, wenn lediglich einer der Teilbereiche des Kerns mit einer Aussparung umrandet ist, oder auch wenn auf beiden Seiten des Schiebers keine Nut vorgesehen ist, in die der Rand der Dekorfolie eingeführt werden könnte. In diesen Fällen kann durch eine entsprechende Einspritztechnik dafür gesorgt werden, dass die Folie in der entsprechenden Kavität korrekt positioniert ist und hinterformt wird.

Bei geschlossenem Werkzeug und bei geschlossenen Teilkavitäten wird zunächst die erste Dekorfolie kernseitig mit einem thermoplastischen Kunststoff hinterformt, wobei die Dekorfolie mit ihrer Sichtseite von der Kunststoffmasse gegen die Matrizenoberfläche gepresst wird. Für den Fall, dass die Folie vorher beim Positionieren in eine Nut eingeführt wurde, wird der Rand der Dekorfolie gleichzeitig aus der Nut heraus und gegen den seitlichen Rand der Kavität gepresst.

Nach dem Verfüllen der ersten Kavität und dem Erstarren des thermoplastischen Kunststoffes wird der Schieber vollständig in den Kern zurückgeschoben und damit die Trennung zwischen dem ersten Dekorbereich und der Kavität für den zweiten Dekorbereich aufgehoben. Auch die zweite Dekorfolie wird dann kernseitig hinterformt und beim Hinterformen ebenfalls mit ihrer Sichtseite gegen die Oberfläche der Matrize gepresst, während der Rand der zweiten Dekorfolie gegen den Rand des ersten Dekorbereiches gedrückt wird. Gleichzeitig verbindet sich die thermoplastische Kunststoffmasse des zweiten Kunststoffes mit dem Kunststoff des ersten Dekorbereichs zu einem einzigen Formteil.

Der Übergang zwischen den beiden Dekorbereichen kann unterschiedlich gestaltet werden. So sieht eine vorteilhafte Ausführungsform des erfindungsgemäßen Verfahrens vor, dass korrespondierend zu dem die beiden Teilbereiche des Kernes trennenden Schieber auf der Matrize Stege angeordnet sind, die beim Schließen des Formteiles mit der Vorderkante des Schiebers in Wirkverbindung treten und die zwischen Matrize und Kern ausgebildete Kavität seitlich begrenzen. In diesem Fall werden beim Hinterformen der Dekorfolien die jeweiligen Ränder der Dekorfolien seitlich gegen den Steg gepresst, sodass im fertigen Formteil zwischen den beiden Dekorbereichen eine Fuge ausgebildet ist.

Ebenso ist es aber auch möglich, ohne derartige Stege zu arbeiten und die Trennung zwischen den Kavitäten ausschließlich über den Schieber zu bewerkstelligen, was dazu führt, dass nach dem Entfernen des Schiebers und dem Hinterformen der zweiten Dekorfolie die beiden Dekorbereiche unmittelbar benachbart sind. In beiden Fällen ist ein nachträgliches Nachbearbeiten des Rands der Dekorfolie überflüssig, da der Randbereich des Dekors nicht mehr vom Rand der Dekorfolie selber, sondern von der Form des Formwerkzeugs bestimmt wird, während der Dekorrand selber nicht mehr sichtbar ist.

Neben der Verwendung einer Spannfläche zur Fixierung der Dekorfolie in den jeweiligen Teilbereichen des Kerns des Formwerkzeugs sind zahlreiche weitere Maßnahmen möglich, um das Einspannen oder Positionieren der Dekorfolie zu verbessern. So kann bspw. die Nutdicke so gewählt werden, dass beim Einführen der Folie in die Nut im Randbereich des Dekors eine Vorspannung erzeugt wird, was mit dazu beiträgt, eine Faltenbildungim Dekor zu vermeiden.

Auch kann das Verbinden der Teilbereiche miteinander zum fertigen Formteil durch eine Vielzahl von Maßnahmen verbessert werden. So kann es vorteilhaft sein, den Übergangsbereich zwischen den beiden Dekorbereichen zusätzlich zu hinterformen, wozu mit Hilfe von weiteren in diesem Bereich im Kern integrierten Schiebern zusätzliche Kavitäten geschaffen werden, die dann mit Kunststoffmasse hinterfüllt werden. Diese Maßnahmen dienen dazu, die Stabilität des Formteils zu erhöhen. Des weiteren können im Übergangsbereich zwischen den beiden Dekorbereichen in den Kunststoffen Narbungen vorgesehen sein, die ein Ineinandergreifen der jeweiligen thermoplastischen Kunststoffe beim Hinterformen der Dekorbereiche ermöglichen und damit die Stabilität des Formteils erhöhen.

Als Dekorfolien können Gewebe, Dekorstoffe, Kunststoff-Folien, Teppichstoffe, Leder oder Lederimitate eingesetzt werden.

Als thermoplastische Kunststoffe zum Hinterformen des Formteiles kommen Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) oder Polyamid (PA) in Frage. Diese Kunststoffmaterialien können dabei pur oder auch als Mischungen eingesetzt werden. Ebenso kann es vorteilhaft sein, zusätzlich Faserverstärkungen, wie Carbon- oder Glasfasern, oder auch andere Additive zuzusetzen, welche die Eigenschaften des Formteils positiv beeinflussen.

Üblicherweise werden nach dem erfindungsgemäßen Verfahren die unterschiedlichen Dekorbereiche mit dem gleichen thermoplastischen Kunststoff hinterformt, um anschließend ein homogen aufgebautes Formteil zu erhalten. Es ist jedoch auch möglich, unterschiedliche, miteinander kombinierbare Kunststoffmaterialien einzusetzen, wenn man bspw. einem Dekorbereich besondere Eigenschaften verleihen will. Dies kann so weit gehen, dass unterschiedliche Thermoplaste eingesetzt werden oder aber es werden bei gleichbleibendem Thermoplast durch den Zusatz entsprechender Additive die Eigenschaften des Formteils für bestimmte Bereiche gezielt variiert. So kann bspw. der Dekorbereich, der einen Airbag abdeckt, anders gestaltet werden als der übrige Bereich des Formteils, wodurch dann die Funktion des Airbags unterstützt werden kann.

Bei einer weiteren vorteilhaften Ausführungsform des erfindungsgemäßen Verfahrens wird im ersten Verfahrensschritt lediglich die erste Dekorfolie zwischen dem Kern und der Rückseite des Schiebers eingelegt, während die zweite Dekorfolie auf der Vorderseite des Schiebers zwischen Schieber und Matrize eingeklemmt wird und auf diese Weise beim Schließen des Formwerkzeugs in die entsprechende Kavität des Formwerkzeugs transportiert wird.

Wie bereits eingangs beschrieben wurde, besitzt der Schieber bei einer weiteren vorteilhaften Ausgestaltung ein- oder beidseitig eine seitliche Aussparung, die für das Einlegen und die Mitnahme der Dekorfolie vorgesehen ist. Auch bei dieser Ausführungsform kann die zweite Folie alternativ zwischen Schieber und Matrize eingeklemmt werden und dann beim Schließen des Formwerkzeugs in die entsprechende Kavität transportiert werden.

Insbesondere bei den beiden letztgenannten Verfahrensvarianten, bei denen die Dekorfolie zwischen Schieber und Matrize eingeklemmt wird, ist es besonders vorteilhaft, wenn korrespondierend zu dem Schieber auf der Matrize Stege angeordnet sind, wodurch die Positionierung der Dekorfolie beim Einlegen in das Werkzeug erleichtert wird.

Im Folgenden wird die Erfindung anhand von ausgesuchten Beispielen mit den dazugehörenden Zeichnungen ausführlich erläutert. Dabei zeigen:
- Fig. 1: einen Querschnitt eines Ausschnitts eines schematisch dargestellten Formwerkzeugs nach dem Einlegen von zwei unterschiedlichen Dekorfolien,
- Fig. 2: den Querschnitt aus Fig. 1 während des Schließens des Formwerkzeugs,
- Fig. 3: den Querschnitt aus den Figuren 1 und 2 während des Hinterformens der ersten Dekorfolie,
- Fig. 4: den Querschnitt eines Ausschnittes aus dem Formwerk- zeug aus den Figuren 1 bis 3 nach dem Hinterformen des ersten Dekorbereichs,
- Fig. 5: den Ausschnitt aus Fig. 4 nach dem vollständigen Zu- rückschieben des Schiebers in den Kern des Formwerk- zeugs,
- Fig. 6: den Ausschnitt aus den Figuren 4 und 5 beim Hinter- formen des zweiten Dekorbereichs,
- Fig. 7: den Querschnitt aus den Figuren 4, 5 und 6 nach dem Hinterformen beider Dekorbereiche,
- Fig. 8: den Querschnitt eines Ausschnitts einer weiteren Aus- gestaltung eines schematisch dargestellten erfin- dungsgemäßen Formwerkzeugs nach dem Einlegen von zwei unterschiedlichen Dekorfolien,
- Fig. 9: den Ausschnitt aus Fig. 8 während des Positionierens der beiden Dekorfolien im Formwerkzeug,
- Fig. 10: den Querschnitt eines Ausschnitts aus Fig. 9 beim Hinterformen des ersten Dekorbereichs,
- Fig. 11: den Ausschnitt aus Fig. 10 beim Hinterformen des zweiten Dekorbereichs,
- Fig. 12: den Ausschnitt aus den Figuren 10 und 11 während des Hinterformens des zweiten Dekorbereichs,
- Fig. 13: einen Querschnitt des Ausschnitts aus den Figuren 10- 12,
- Fig. 14: den Querschnitt eines Ausschnittes eines Formteils mit zwei unterschiedlichen Dekorbereichen nach dem Öffnen des Formwerkzeugs,
- Fig. 15: den Querschnitt eines Ausschnittes eines Formwerk- zeugs mit einem zusätzlichen Schieber im Übergangsbe- reich zwischen den beiden Dekorbereichen,
- Fig. 16: den Querschnitt eines Ausschnittes eines weiteren Formwerkzeugs mit einem zusätzlichen Schieber im Ü- bergangsbereich zwischen den beiden Dekorbereichen und
- Fig. 17: den Querschnitt eines Ausschnittes eines Formwerk- zeugs mit einem Schieber mit seitlichen Aussparungen zum Transport der Dekorfolien.

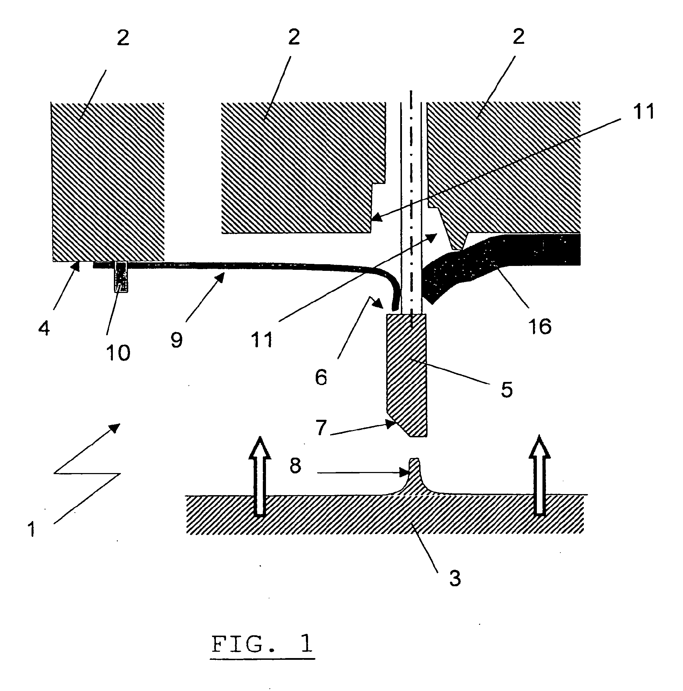

In der Figur 1 ist ein Ausschnitt eines erfindungsgemäßen Formwerkzeugs 1 schematisch im Querschnitt dargestellt. Diese Darstellung ist auf den Bereich um den Schieber 5 fokussiert, während von dem Formwerkzeug 1 lediglich Teilbereiche der Matrize 3 und des Kernes 2 zu erkennen sind, die zur Veranschaulichung der vorliegenden Erfindung erforderlich sind.

Die Figur 1 zeigt das Formwerkzeug 1 im geöffneten Zustand, nachdem die Dekorfolien 16, 9 zwischen der Rückseite 6 des Schiebers 5 und dem Formwerkzeugkern 2 eingelegt worden sind. Bei der vorliegenden Ausführungsform ist die Dekorfolie 9 zusätzlich mit einem Befestigungsmittel 10 auf einer Spannfläche 4 fixiert, wobei die Spannfläche 4 als beweglicher Teil des Formwerkzeugkerns 2 ausgeführt und oberhalb der Oberfläche des Formwerkzeugkerns 2 angeordnet ist. Das Formwerkzeugkern 2 wird durch den Schieber 5 in zwei Teilbereiche aufgeteilt, die beide jeweils an ihrem Rand eine Aussparung 11 aufweisen.

Die Rückseite 6 des Schiebers 5 ist den jeweiligen Folien 9, 16, die beim Zurückschieben des Schiebers 5 in den Werkzeugkern 2 mitgenommen werden sollen, angepasst. So ist der Schieber 5 auf der Seite, auf der die vergleichsweise dünne Folie 9 mitgenommen werden soll, relativ breit und flach ausgeführt, um auf diese Weise sicherzustellen, dass die Dekorfolie 9 beim Schließen des Formwerkzeugs 1 nicht über die Schieberrückseite 6 hinausrutscht. Auf der gegenüberliegenden Seite ist die Rückseite 6 des Schiebers 5 relativ schmal gehalten, was angesichts der vergleichsweise dicken Folie 16 unproblematisch ist, da diese relativ klein gehaltene Rückseite 6 ausreicht, um die Dekorfolie 16 in die Nut 12 einzuklemmen. Auch die Front 7 des Schiebers 5 ist für die verschiedenen Dekorbereiche unterschiedlich gestaltet. So ist der seitliche Randbereich für die Dekorfolie 9 durch die Frontpartie 7 des Schiebers 5 rückläufig gestaltet, während der seitliche Randbereich für die Dekorfolie 16 glatt ausgeführt ist.

Der in Fig. 1 dargestellte Ausschnitt gibt eine Momentaufnahme während des Schließens des Formwerkzeugs 1 wieder, kurz bevor der zum Schieber 5 korrespondierend angeordnete Steg 8 in Wirkverbindung mit dem Schieber 5 tritt und diesen zusammen mit den Folien 9, 16 in Richtung Formwerkzeugkern 2 schiebt. Die in die Matrize 3 eingezeichneten Richtungspfeile geben die Bewegungsrichtung der Matrize 3 beim Schließen des Formwerkzeugs 1 an,

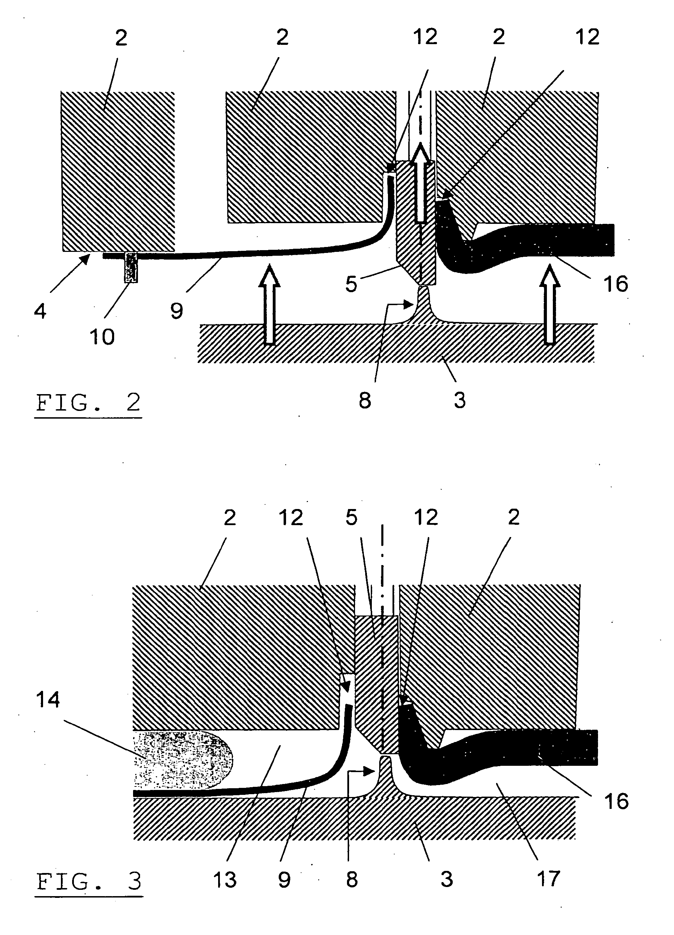

In der Figur 2 wird bei gleicher Darstellung ein Folgeschritt des Verfahrens dargestellt. Es handelt sich um eine Momentaufnahme während des Verschließens des Formwerkzeugs, wobei die Matrize 3 mit ihrem Steg 8 den Schieber 5 in den Kern 2 des Formwerkzeugs 1 schiebt und die Dekorfolien 16, 9 durch den Schieben 5 bereits in jeweils eine Nut 12, die sich auf beiden Seiten des Schiebers 5 zwischen Kern 2 und Schieber 5 ausgebildet hat, eingeführt sind.

Die Figur 3 zeigt einen Ausschnitt des Querschnitts aus Figur 2 im geschlossenen Zustand des Formwerkzeugs zum Zeitpunkt des Hinterformens der ersten Dekorfolie 9. Durch die Kunststoffmasse 14 wird die Dekorfolie 9 mit ihrer Sichtseite auf die Oberfläche der Matrize 3 gepresst, wobei der Rand der Dekorfolie 9 durch den Druck der Kunststoffmasse bereits ein Stück aus der Nut 12 herausgepresst wurde. Zwischen Matrize 3 und Kern 2 sind im geschlossenen Zustand des Formwerkzeugs zwei Kavitäten 13, 17 ausgebildet, die durch den Steg 8 im Zusammenspiel mit dem Schieber 5 voneinander getrennt sind.

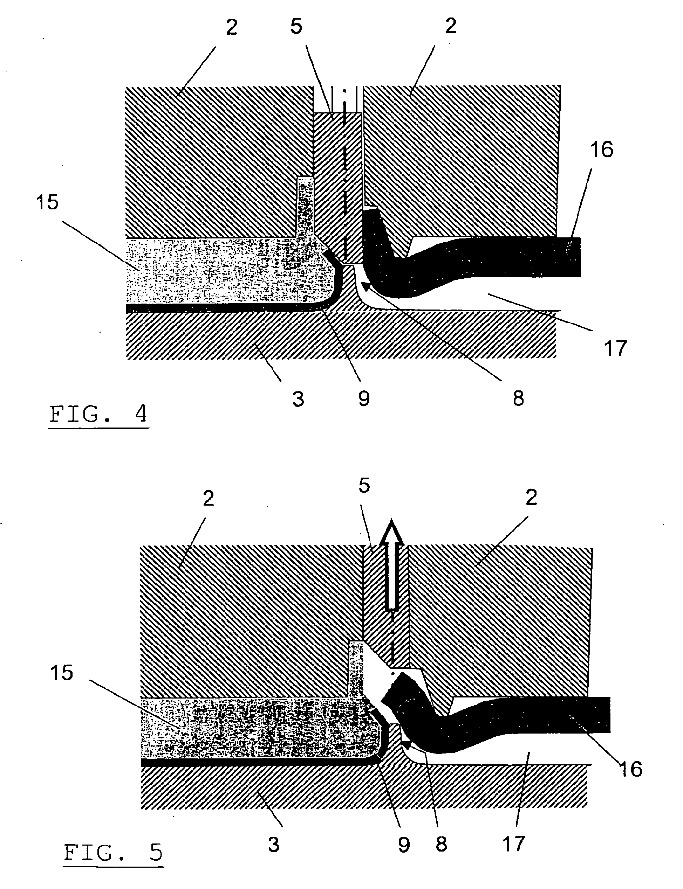

Die Figur 4 zeigt den Ausschnitt aus Figur 3, nachdem die erste Dekorfolie 9 hinterformt und ein Dekorbereich 15 ausgebildet wurde.

Die Figur 5 zeigt den nächsten Schritt des Verfahrens mit Hilfe des gleichen Ausschnitts, nachdem der Schieber 5 vollständig in den Kern zurückgeschoben worden ist und so die Verbindung zwischen dem Dekorbereich 15 und der Kavität 17 freigegeben hat.

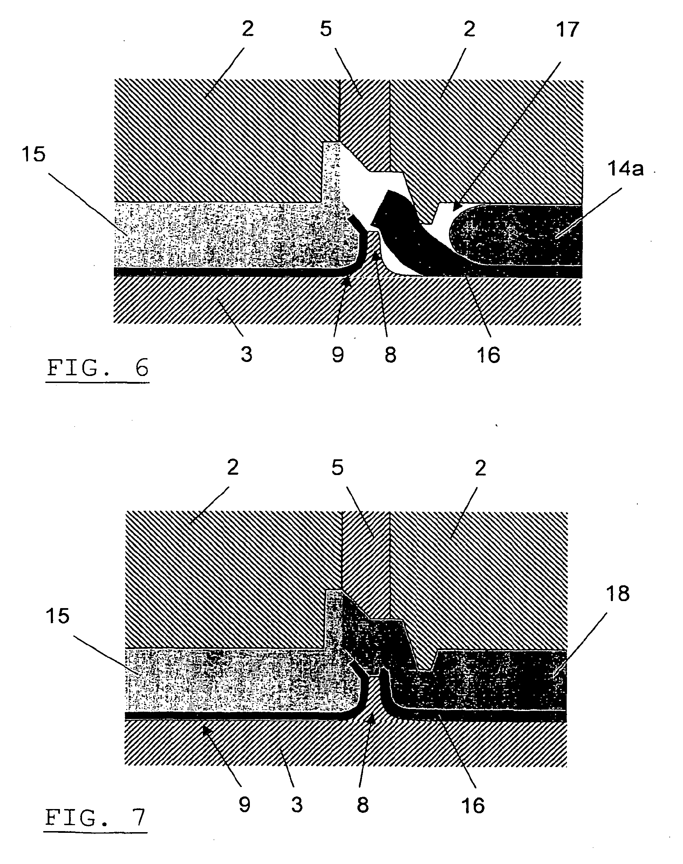

Die Figur 6 zeigt den Ausschnitt aus den Figuren 4 und 5 beim Hinterformen der zweiten Dekorfolie 16 mit einem thermoplastischen Kunststoff 14a. Wie bereits beim Hinterformen des ersten Dekorbereichs wird auch die Dekorfolie 16 dabei mit ihrer Sichtseite gegen die Oberfläche der Matrize 3 gepresst.

In der Figur 7 ist der Prozess des Hinterformens für beide Dekorbereiche 15 und 18 abgeschlossen und die Kunststoffmassen 14, 14a haben sich zu einem einzigen Formteil verbunden, das zwei aneinandergrenzende, unterschiedliche Dekorbereiche 15, 18 aufweist. Die Abbildung 7 zeigt das fertig hinterformte Formteil bei noch geschlossenem Formwerkzeug 1. Auf der Sichtseite sind die beiden Dekorbereiche 18, 15 durch den Steg 8 der Matrize 3 voneinander getrennt. Somit werden nach dem Öffnen des Formwerkzeugs 1 die beiden Dekorfolien 16, 9 mittels einer Fuge, die sich anstelle des Steges 8 ausbildet, getrennt sein. Erfindungsgemäß ist die Fuge so gestaltet, dass keine nachträgliche Bearbeitung des Überganges zwischen den beiden Dekorbereichen 15, 18 erforderlich ist und eine einwandfreie optische Gestaltung der Dekorbereiche 15, 18 vorliegt.

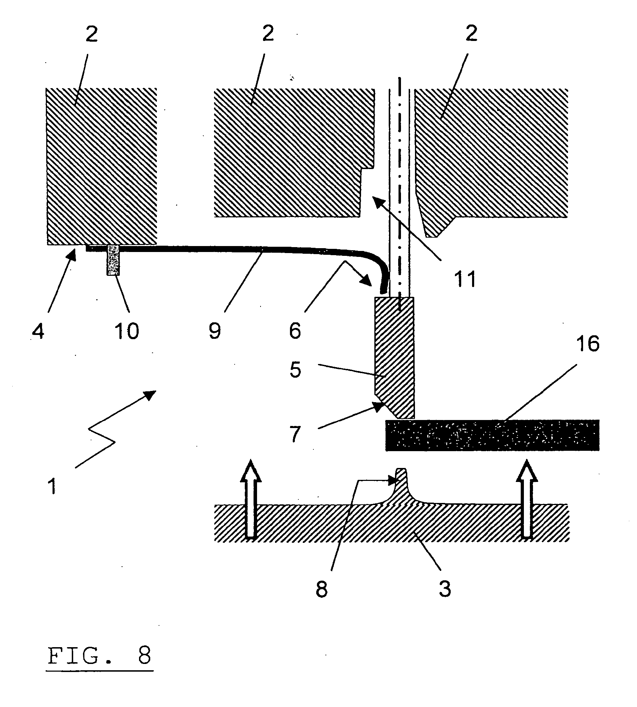

Die Figur 8 zeigt den Querschnitt eines Ausschnitts einer weiteren Ausgestaltung des erfindungsgemäßen Formwerkzeugs 1. In Analogie zur Figur 1 zeigt die Figur 8 ebenfalls eine Momentaufnahme, bei der zwei unterschiedliche Dekorfolien 16, 9 in das Formwerkzeug 1 eingelegt sind. Im Gegensatz zu Figur 1 ist jetzt jedoch lediglich eine Dekorfolie 9 zwischen dem Schieber 5 und dem Kern 2 des Formwerkzeugs 1 angeordnet, während die zweite Dekorfolie 16 zwischen der Front 7 des Schiebers 5 und der Matrize 3 angeordnet ist. Die Bewegungsrichtung der Matrize 3 beim Schließen des Formwerkzeugs 1 ist wiederum mit entsprechenden Richtungspfeilen in der Matrize 3 angegeben. Auch die einzelnen Teilbereiche des Formwerkzeugkerns 2 sind unterschiedlich gestaltet. So weist lediglich der für die Hinterformung der Dekorfolie 9 vorgesehene Teilbereich des Formwerkzeugkerns 2 an seinem Rand eine Aussparung 11 auf, während der für die Hinterformung der Folie 16 vorgesehene Teilbereich des Formwerkzeugkerns 2 an seinem Rand lediglich leicht abgeschrägt ist.

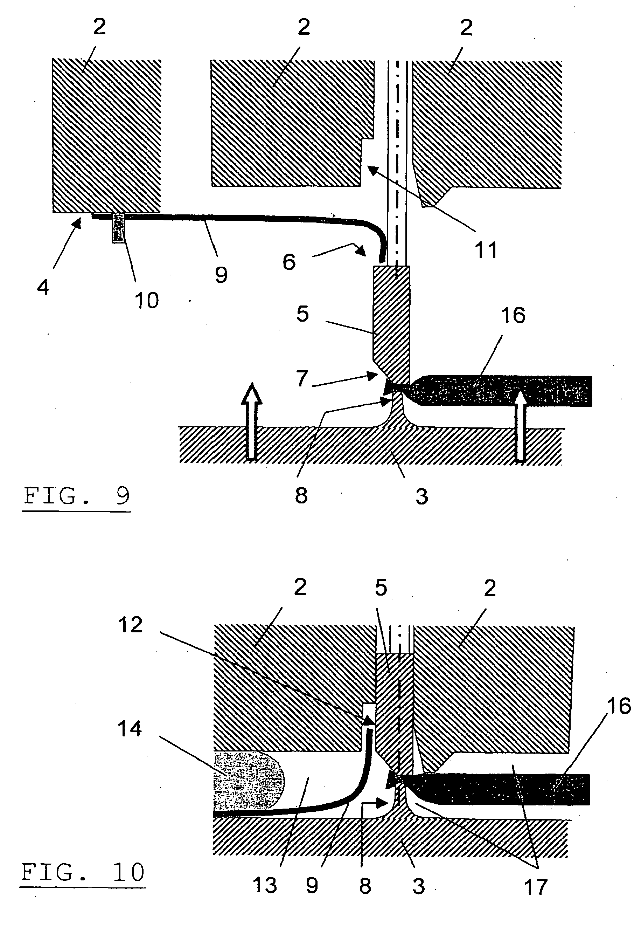

Aus der Abbildung 9 wird der unterschiedliche Mitnahmemechanismus für die einzelnen Folien 16, 9 ersichtlich. Während die Folie 9 in Analogie zur vorher geschilderten Ausführungsform des Formwerkzeugs 1 von der Rückseite 6 des Schiebers 5 in Richtung Aussparung 11 transportiert wird, wird der Rand der Folie 16 zwischen dem Frontbereich 7 des Schiebers 5 und dem korrespondierend zum Schieber 5 auf der Matrize 3 angeordneten Steg 8 eingeklemmt. Beim Vorschub des Schiebers 5 in Richtung Kern 2 wird die Folie 9 in die zwischen Schieber 5 und Kern 2 ausgebildete Nut 12 eingeführt, während die Folie 16 unverändert eingeklemmt zwischen Schieber 5 und Steg 8 verbleibt. Dieser Zustand ist in der Figur 10 wiedergegeben, die eine Momentaufnahme beim Hinterformen der ersten Dekorfolie 9 mit der Kunststoffmasse 14 zeigt. Des Weiteren sind in der Figur 10 die beiden Kavitäten 17, 13 zu erkennen, die durch das Zusammenspiel von Schieber 5 und Steg 8 ausgebildet werden.

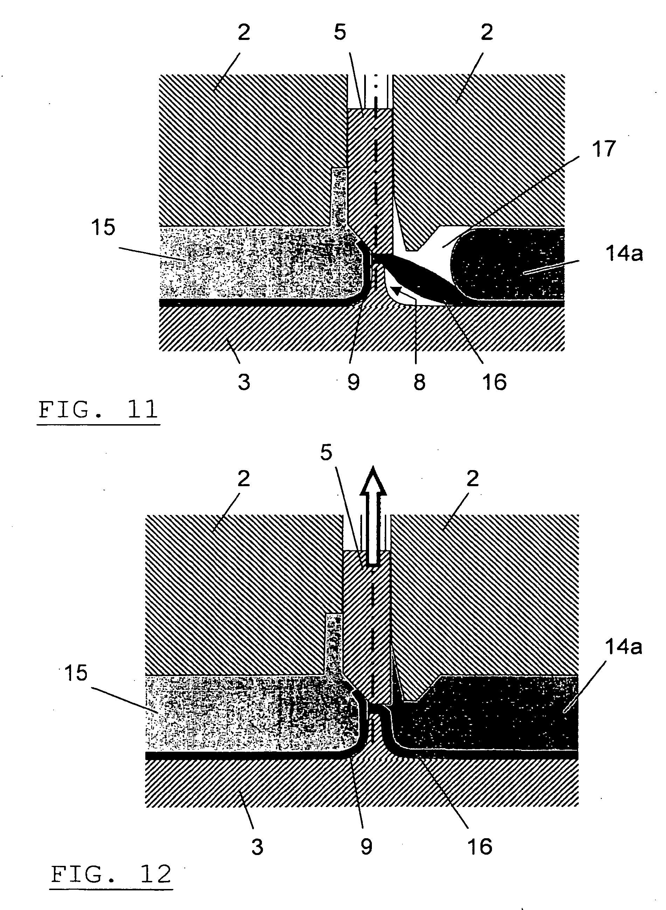

Die Figur 11 zeigt den Querschnitt aus Figur 10 beim Hinterformen der Dekorfolie 16 mit der Kunststoffmasse 14a, wobei die Kavität 17 noch nicht vollständig mit der Kunststoffmasse 14 a verfüllt ist, die Dekorfolie 16 noch zwischen Schieber 5 und Steg 8 eingeklemmt ist und der Dekorbereich 15 und die Kavität 17 noch immer durch den Schieber 5 voneinander getrennt sind.

Die Figur 12 zeigt den Ausschnitt aus Figur 11 nach dem vollständigen Hinterformen der Dekorfolie 16 mit dem Kunststoff 14a vor dem Zurückschieben des Schiebers 5 in den Kern 2.

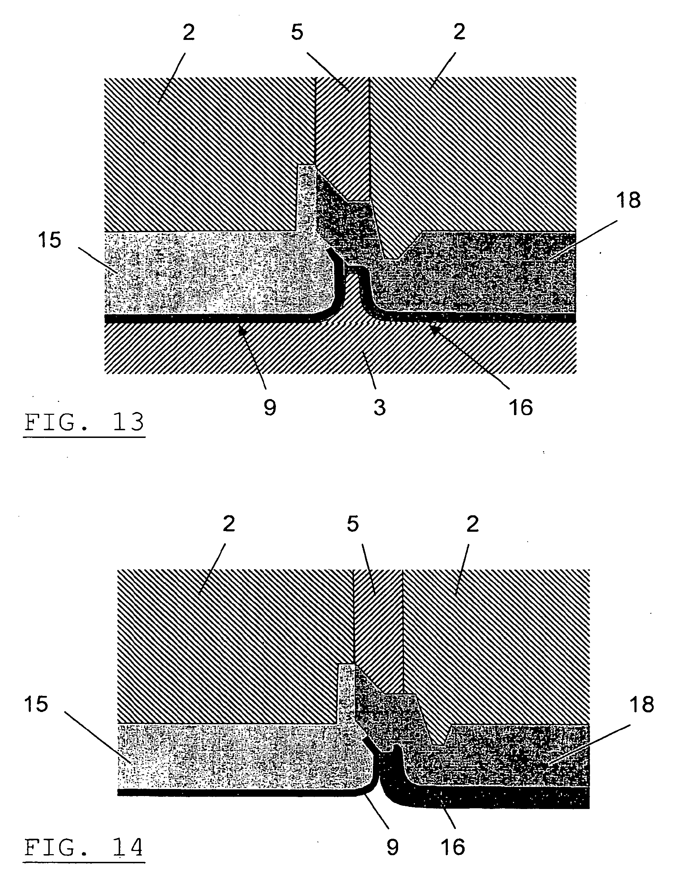

Die Figur 13 zeigt das fertige Formteil mit den beiden unterschiedlichen Dekorbereichen 15 und 18 und den entsprechenden Dekorfolien 9 und 16 auf seiner Sichtseite. Der Schieber 5 ist vollständig in den Formwerkzeugkern 2 zurückgeschoben, wodurch eine Verbindung zwischen den beiden Dekorbereichen 15 und 18 ermöglicht wird.

Die Figur 14 zeigt einen Ausschnitt aus Figur 13 nach dem Öffnen des Formwerkzeugs 1 durch das Entfernen der Matrize 3. Bei der vorliegenden Darstellung ist die Dekorfolie 16 bzw. sind die Arbeitsbedingungen so gewählt, dass die Dekorfolie 16 sich nach dem Entfernen der Matrize 3 direkt an die Dekorfolie 9 des Dekorbereiches 15 anlegt. Diese Ausführungsvariante ist dann möglich, wenn die Dekorfolie 16 eine ausreichende Elastizität aufweist bzw. wenn die Kunststoffmasse 14, 14a beim Öffnen des Formwerkzeugs 1 noch eine Restplastizität aufweist.

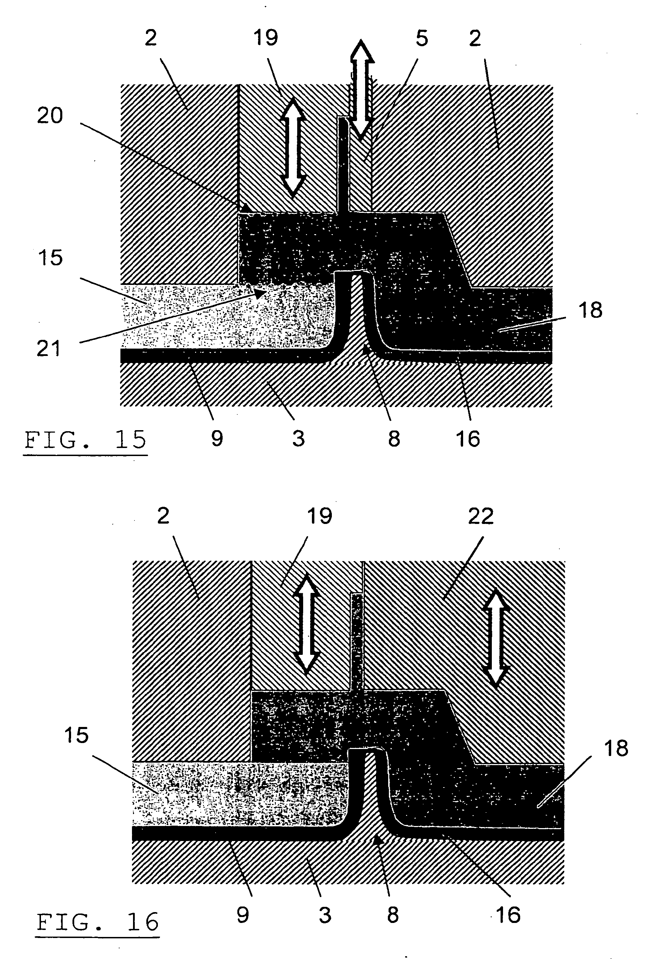

Die Figuren 15 und 16 zeigen zwei zusätzliche Möglichkeiten auf, die rückwärtige Verbindung zwischen den beiden Dekorbereichen 15, 18 zu gestalten. Bei der in der Figur 15 gezeigten Ausführungsform ist dazu das Formwerkzeug 1 mit einem zusätzlichen, ebenfalls im Formwerkzeugkern 2 integrierten Schieber 19 ausgerüstet, mit dem durch Zurückschieben in den Kern 2 nach dem Hinterformen der zweiten Dekorfolie 16 eine weitere Kavität freigegeben wird, die ebenfalls mit thermoplastischem Kunststoff gefüllt wird, wodurch dann eine relativ breite Überlappung der Kunststoffmaterialien 14, 14a der beiden Dekorbereiche 15, 18 erreicht wird. Bei der in der Figur 15 gezeigten Ausführungsform wird eine zusätzliche Stabilisierung des Formteiles dadurch erreicht, dass der Schieber 19 auf seiner zur Kavität gerichteten Seite eine Narbung 20 aufweist, mit deren Hilfe eine Verzahnung 21 der beiden Dekorbereiche 15, 18 miteinander ermöglicht wird, wodurch das gesamte Formteil zusätzlich verstärkt wird.

Die Figur 16 zeigt eine Ausführungsform des Formwerkzeugs 1, bei dem ein Teilbereich des Formwerkzeugkerns 2 als Schieber 22 ausgebildet ist und im Formwerkzeugkern 2 ein zusätzlicher Schieber 19 integriert ist, der nach dem Hinterformen der zweiten Dekorfolie 16 eine zusätzliche Kavität freigibt, um die Verbindungsbildung zwischen den Dekorbereichen 15, 18 zu verbessern.

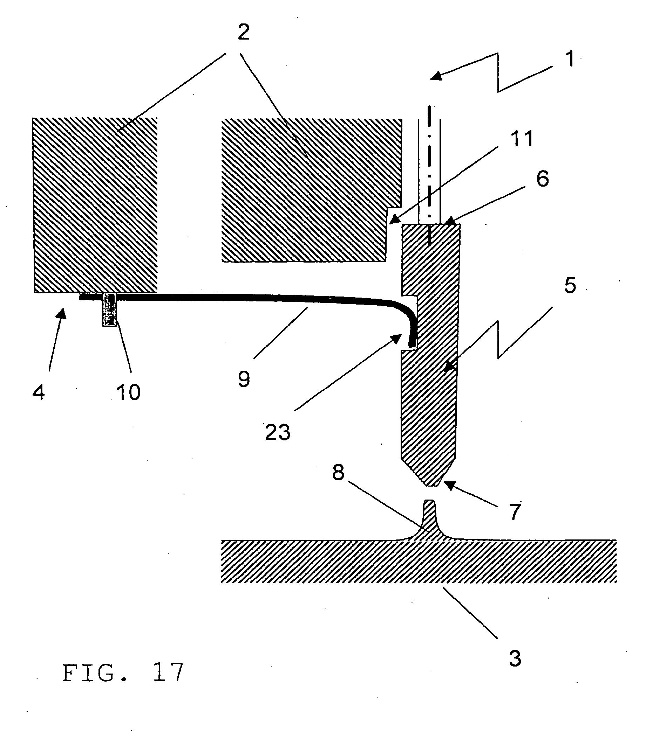

Die Figur 17 ist der Querschnitt eines Ausschnitts aus einem Formwerkzeug 1, bei dem der Schieber 5 einseitig eine seitliche Aussparung 23 zur Mitnahme einer Dekorfolie aufweist. Diese Darstellung dient lediglich dazu, ein zusätzliches Mittel für die Positionierung der Dekorfolie 9 im Formwerkzeug 1 aufzuzeigen, so dass auf die Darstellung des zweiten Dekorbereichs verzichtet wurde. Die Dekorfolie 9 ist im Formwerkzeug 1 zwischen Kern und 2 und Schieber 5 eingelegt, wobei der Randbereich der Dekorfolie 9 in die seitliche Schieberaussparung 23 eingreift. Beim Schließen des Formwerkzeugs 1 wird die Dekorfolie 9 von der seitlichen Aussparung 23 des Schiebers 5 mitgenommen und in die dann zwischen Kern 2 und Schieber 5 durch die Aussparung 11 ausgebildete Nut eingeführt. Auch in diesem Ausführungsbeispiel ist die Dekorfolie 9 mit einem Befestigungsmittel 10 auf einer Spannfläche 4 fixiert. Ebenso ist auf der Oberfläche der Matrize 3 dem Schieber 5 direkt gegenüberliegend ein Steg 8 angeordnet. Die zweite Dekorfolie 16 kann bei dieser Ausführungsform des Schiebers 5 zwischen Steg 8 und Schieber 5 eingeklemmt und dann im Werkzeug 1 positioniert werden oder aber mit der Rückseite 6 in das Formwerkzeug 1 transportiert werden, was voraussetzt, dass der Schieber 5 im benachbarten Dekorbereich mit der Rückseite 6 über die Oberfläche des Kerns 2 hinausragt.

### Bezugszeichenliste

- 1: Formwerkzeug
- 2: Formwerkzeugkern
- 3: Formwerkzeugmatrize
- 4: Spannfläche
- 5: Schieber
- 6: Rückseite Schieber
- 7: Vorderseite Schieber
- 8: Steg
- 9: Dekorfolie
- 10: Befestigungsmittel (Nadel)
- 11: Aussparung
- 12: Nut
- 13: Kavität
- 14: thermoplastischer Kunststoff
- 14a: thermoplastischer Kunststoff
- 15: Dekorbereich
- 16: Dekorfolie
- 17: Kavität
- 18: Dekorbereich
- 19: Schieber
- 20: Narbung
- 21: Verzahnung
- 22: Schieber
- 23: Schieberaussparung

## Patentansprüche

1. Verfahren zur Herstellung eines Formteils mit mehreren aneinandergrenzenden, unterschiedlichen Dekorbereichen (15, 18) mit Hilfe eines eine Matrize (3) und einen Kern (2) umfassenden Formwerkzeugs (1) durch Hinterformen von mehreren unterschiedlichen, in das Formwerkzeug (1) eingelegten Dekorfolien (9, 16) mit einem thermoplastischen Kunststoff (14, 14a), wobei
a) die unterschiedlichen Dekorfolien (9, 16) in das geöffnete Formwerkzeug (1) eingelegt werden;
b) die Dekorfolien (9, 16) mit Hilfe eines im Kern (2) integrierten, bei geöffnetem Formwerkzeug (1) über die Oberfläche des Formwerkzeugkerns (2) herausragenden, den Kern (2) in unterschiedliche Teilbereiche trennenden und Mittel zur Mitnahme von Dekorfolien (9, 16) aufweisenden Schiebers (5) in Spritzposition gebracht werden, wobei durch einen Formschluss zwischen Matrize (3) und Schieber (5) separate Kavitäten (13, 17) zwischen Kern (2) und Matrize (3) für die unterschiedlichen Dekorbereiche (15, 18) ausgebildet werden;
c) im geschlossenen Werkzeug (1) zunächst die erste Dekorfolie (9) in der ersten Kavität (13) kernseitig mit einem thermoplastischen Kunststoff (14) hinterformt wird, **dadurch gekennzeichnet, dass**
d) nach dem Erstarren des ersten Dekorbereichs (15) der Schieber (5) in den Kern (2) zurückgeschoben und so die Trennung zwischen dem Dekorbereich (15) und der zweiten Kavität (17) aufgehoben wird, und
e) anschließend die zweite Dekorfolie (16) in der zweiten Kavität (17) mit einem thermoplastischen Kunststoff (14a) hinterformt wird, wobei die formgebenden thermoplastischen Kunststoffe (14, 14a) sich miteinander verbinden und ein Verbundformteil mit aneinandergrenzenden, unterschiedlichen Dekorbereichen (15, 18) ausbilden.

2. Verfahren nach Anspruch 1,
**dadurch gekennzeichnet, dass** ein Schieber (5) mit mindestens einer als Mittel zu Mitnahme von Dekorfolien (9, 16) ausgebildeten flachen Rückseite (6) eingesetzt wird.

3. Verfahren nach Anspruch 1,
**dadurch gekennzeichnet, dass** ein Schieber (5) mit mindestens einer als Mittel zur Mitnahme von Dekorfolien (9, 16) ausgebildeten seitlichen Aussparung (23) eingesetzt wird.

4. Verfahren nach einem der Ansprüche 1 bis 3,
**dadurch gekennzeichnet, dass** das Hinterformen durch Hinterspritzen oder Hinterschäumen erfolgt.

5. Verfahren nach einem der Ansprüche 1 bis 4,
**dadurch gekennzeichnet, dass** vor dem Hinterformen mindestens eine Dekorfolie (9, 16) auf einer auf der Kernseite des Formwerkzeugs (1) angeordneten Spannfläche (4) mit Hilfe von Befestigungsmitteln (10) fixiert wird.

6. Verfahren nach einem der Ansprüche 1 bis 5,
**dadurch gekennzeichnet, dass** die unterschiedlichen Dekorfolien (9, 16) zwischen dem Kern (2) und dem Schieber (5) eingelegt werden und beim Schließen des Werkzeuges (1) die Ränder der Dekorfolien (9, 16) mit Hilfe des Schiebers (5) in jeweils durch Aussparungen (11) zwischen Kern (2) und Schieber (5) ausgebildete Nuten (12) eingeführt werden.

7. Verfahren nach einem der Ansprüche 1 bis 5,
**dadurch gekennzeichnet, dass** die erste Dekorfolie (9) zwischen dem Kern (2) und dem Schiebers (5) eingelegt wird, während die zweite Dekorfolie (16) zwischen Schieber (5) und Matrize (3) eingelegt und beim Schließen des Werkzeuges (1) mit ihrem Rand zwischen der Matrize (3) und Schieber (5) eingeklemmt wird, wobei der Rand der ersten Dekorfolie (9) beim Schließen des Werkzeugs mit Hilfe des Schiebers (5) in eine durch eine Aussparung (11) am Kern (2) zwischen Kern (2) und Schieber (5) ausgebildete Nut (12) eingeführt wird, während die zwischen Schieber (5) und Matrize (3) eingeklemmte Dekorfolie (16) in ihrer Position verbleibt.

8. Verfahren nach einem der Ansprüche 1 bis 7,
**dadurch gekennzeichnet, dass** das der Schieber (5) eigenständig geschlossen wird.

9. Verfahren nach einem der Ansprüche 1 bis 7,
**dadurch gekennzeichnet, dass** das Schließen des Schiebers (5) durch das Schließen des Werkzeugs (1) erfolgt, wobei der Schieber (5) von der Matrize (3) in Richtung Kern (2) geschoben wird.

10. Verfahren nach Anspruch 9,
**dadurch gekennzeichnet, dass** die Betätigung des Schiebers (5) beim Schließen des Werkzeugs (1) durch korrespondierend zum Schieber (5) auf der Matrize (3) angeordnete und mit dem Schieber (5) in Wirkverbindung tretende Stege (8) erfolgt.

11. Verfahren nach einem der Ansprüche 1 bis 10,
**dadurch gekennzeichnet, dass** ein sich auf seiner Vorderseite (7) einseitig verjüngender Schieber (5) eingesetzt wird, wodurch in der ersten Kavität (13) für den Dekorbereich (15) ein zurückweichender Rand ausgebildet wird, der beim Hinterformen einen Dekorbereich (15) mit einer den Rand rückwärtig überlappenden Dekorfolie (9) liefert.

12. Verfahren nach einem der Ansprüche 1 bis 11,
**dadurch gekennzeichnet, dass** als Dekorfolien (9, 16) Gewebe, Dekorstoffe, Kunststoff-Folien, Teppichstoffe, Leder und Lederimitate eingesetzt werden.

13. Verfahren nach einem der Ansprüche 1 bis 12,
**dadurch gekennzeichnet, dass** als thermoplastischer Kunststoff (14, 14a) Polypropylen (PP), Polyethylen (PE), Polyurethan (PU), Acrylnitril-Butadien-Styrol (ABS), Acrylnitril-Butadien-Styrol / Polycarbonat Copolymerisat (ABS-PC) oder Polyamid (PA) eingesetzt wird.

14. Formwerkzeug (1) zur Verwendung in einem Verfahren nach einem der Ansprüche 1-13, mit einem Formwerkzeugkern (2) und einer Formwerkzeugmatrize (3) zur Herstellung von Formteilen mit mehreren aneinandergrenzenden, unterschiedlichen Dekorbereichen, wobei der Formwerkzeugkern (2) mehrere durch mindestens einen in den Formwerkzeugkern (2) integrierten Schieber (5) voneinander getrennte Teilbereiche aufweist, wobei der Schieber (5) Mittel zur Mitnahme von Dekorfolien (9, 16) aufweist und im geöffneten Zustand des Formwerkzeugs (1) über die Oberfläche des Formwerkzeugkerns (2) hinausragt, wobei
im geschlossenen Zustand des Formwerkzeugs (1) die Kavitäten (13, 17) für die Dekorbereiche (15, 18) durch einen Formschluss zwischen Schieber (5) und Matrize (3) voneinander getrennt sind, wobei zwischen Schieber (5) und Kern (2) auf mindestens einer Seite des Schiebers (5) eine Nut (12) zur Aufnahme des Randes mindestens einer Dekorfolie (9, 16) ausgebildet ist, wobei der Schieber (5) zum vollständigen Einschieben in den Formwerkzeugkern (2) vorgesehen ist und nach dem Hinterformen des ersten Dekorbereichs durch Verschieben des Schiebers (5) in den Formwerkzeugkern (2) die Trennung zwischen den jeweiligen Dekorbereichen (15, 18) aufhebbar ist.

15. Formwerkzeug nach Anspruch 14, wobei
der Schieber (5) als Mittel zu Mitnahme von Dekorfolien (9, 16) kernseitig eine flach ausgebildete Schieberrückseite (6) aufweist.

16. Formwerkzeug nach Anspruch 14, wobei
der Schieber (5) als Mittel zur Mitnahme von Dekorfolien (9, 16) mindestens eine seitliche Schieberaussparung (23) aufweist.

17. Formwerkzeug nach einem der Ansprüche 14 bis 16, wobei
der Schieber (5) in Richtung Matrize (3) eine sich verjüngende vordere Schieberseite (7) mit einer für den Verbindungsschluss mit der Matrize (3) vorgesehenen flachen Vorderkante aufweist.

18. Formwerkzeug nach einem der Ansprüche 14 bis 17, wobei
der Formwerkzeugkern (2) in mindestens einem für die Ausbildung eines Dekors vorgesehenen Teilbereich zusätzlich eine Spannfläche (4) für die Fixierung einer Dekorfolie (9, 16) aufweist.

19. Formwerkzeug nach Anspruch 18, wobei
im geöffneten Zustand des Formwerkzeugs (1) der Schieber (5) so weit über die Spannfläche (4) hinaus aus dem Formwerkzeugkern (2) herausragt, dass zwischen Spannfläche (4) und der Rückseite (6) des Schiebers (5) ausreichend Platz für das Einlegen einer Dekorfolie (9, 16) vorhanden ist.

20. Formwerkzeug nach einem der Ansprüche 14 bis 19, wobei
mindestens einer der für die Ausbildung eines Dekors vorgesehenen Bereiche des Formwerkzeugskerns an seinem Rand umlaufend eine Aussparung (11) aufweist.

21. Formwerkzeug nach einem der Ansprüche 14 bis 20, wobei
die Matrize (3) zum Schieber (5) korrespondierend angeordnete Stege (8) aufweist.

## Claims

1. A method of producing a moulded part with a plurality of mutually adjacent different decorative areas (15, 18) with the aid of a shaping tool (1) comprising a die (3) and a core (2), by having moulded at the back a plurality of different decorative sheets (9, 16) - inserted into the shaping tool (1) - with a thermoplastic plastics material (14, 14a), wherein
a) the different decorative sheets (9, 16) are inserted into the opened shaping tool (1);
b) the decorative sheets (9, 16) are brought into the injection-moulding position with the aid of a slide (5) integrated in the core (2), projecting beyond the surface of the shaping tool core (2) when the shaping tool (1) is opened, dividing the core (2) into different partial areas and comprising means for the entrainment of decorative sheets (9, 16), wherein separate cavities (13, 17) are formed between the core (2) and the die (3) for the different decorative areas (15, 18) by positive locking between the die (3) and the slide (5),
c) in the closed tool (1) the first decorative sheet (9) is first moulded at the back towards the core with a thermoplastic plastics material (14) in the first cavity (13),
**characterized in that**
d)after the setting of the first decorative area (15) the slide (5) is pressed back into the core (2) and in this way the separation between the decorative area (15) and the second cavity (17) is discontinued, and
e) the second decorative sheet (16) is then moulded at the back with a thermoplastic plastics material (14) in the second cavity (17), wherein the shaping thermoplastic plastics materials (14, 14a) are joined together and form a composite moulded part with mutually adjacent different decorative areas (15, 18).

2. A method according to claim 1, **characterized in that** a slide (5) with at least one flat rear side (6) formed as a means for the entrainment of decorative sheets (9, 16) is used.

3. A method according to claim 1, **characterized in that** a slide (5) with at least one lateral recess (23) formed as a means for the entrainment of decorative sheets (9, 16) is used.

4. A method according to any one of claims 1 to 3, **characterized in that** the moulding at the back is carried out by injection moulding at the back or foaming at the back.

5. A method according to any one of claims 1 to 4, **characterized in that** before the moulding at the back at least one decorative sheet (9, 16) is fixed with the aid of fastening means (10) to a clamping surface (4) provided on the core side of the moulding tool (1).

6. A method according to any one of claims 1 to 5, **characterized in that** the different decorative sheets (9, 16) are inlaid between the core (2) and the slide (5), and during the closure of the tool (1) the edges of the decorative sheets (9, 16) are inserted with the aid of the slide (5) into grooves (12) formed in each case by recesses (11) between the core (2) and the slide (5).

7. A method according to any one of claims 1 to 5, **characterized in that** the first decorative sheet (9) is inlaid between the core (2) and the slide (5), whilst the second decorative sheet (16) is inlaid between the slide (5) and the die (3) and during the closure of the tool (1) is clamped with its edge between the die (3) and the slide (5), wherein the edge of the first decorative sheet (9) is inserted during the closure of the tool with the aid of the slide (5) into a groove (12) formed by a recess (11) in the core (2) between the core (2) and the slide (5), whilst the decorative sheet (16) clamped between the slide (5) and the die (3) remains in its position.

8. A method according to any one of claims 1 to 7, **characterized in that** the slide (5) is closed independently.

9. A method according to any one of claims 1 to 7, **characterized in that** the closure of the slide (5) takes place as a result of the closure of the tool (1), wherein the slide (5) is pressed in the direction of the core (2) by the die (3).

10. A method according to claim 9, **characterized in that** the actuation of the slide (5) is carried out during the closure of the tool (1) by webs (8) operatively connected to the slide (5) and arranged on the die (3) in a manner corresponding to the slide (5).

11. A method according to any one of claims 1 to 10, **characterized in that** a slide (5) tapering on one side on its front side (7) is used, as a result of which a yielding edge, which during the moulding at the back provides a decorative area (15) with a decorative sheet (9) overlapping the edge at the rear, is formed in the first cavity (13) for the decorative area (15).

12. A method according to any one of claims 1 to 11, **characterized in that** fabrics, decorative materials, sheets of plastics material, carpet fabrics, leather and imitation leather are used as the decorative sheets (9, 16).

13. A method according to any one of claims 1 to 12, **characterized in that** polypropylene (PP), polyethylene (PE), polyurethane (PU), acrylonitrile butadiene styrene (ABS), acrylonitrile butadiene styrene / polycarbonate copolymerizate (ABS-PC) or polyamide (PA) is used as the thermoplastic plastics material (14, 14a).

14. A moulding tool (1) for use in a method according to any one of claims 1 to 13, with a moulding tool core (2) and a moulding tool die (3) for producing moulded parts with a plurality of mutually adjacent different decorative areas, wherein the moulding tool core (2) has a plurality of partial areas separated from one another by at least one slide (5) integrated in the moulding tool core (2), wherein the slide (5) has means for the entrainment of decorative sheets (9, 16) and projects beyond the surface of the moulding tool core (2) in the opened state of the moulding tool (1), wherein in the closed state of the moulding tool (1) the cavities (13, 17) for the decorative areas (15, 18) are separated from one another by positive locking between the slide (5) and the die (3), wherein a groove (12) for receiving the edge of at least one decorative sheet (9, 16) is formed between the slide (5) and the core (2) on at least one side of the slide (5), wherein the slide (5) is provided for complete insertion into the moulding tool core (2) and the separation between the respective decorative areas (15, 18) is discontinued after the moulding of the first decorative area at the back by displacement of the slide (5) into the moulding tool core (2).

15. A moulding tool according to claim 14, wherein the slide (5) has means for the entrainment of decorative sheets (9, 16) in the form of a slide rear side made flat towards the core.

16. A moulding tool according to claim 14, wherein the slide (5) has means for the entrainment of decorative sheets (9, 16) in the form of at least one lateral slide recess (23).

17. A moulding tool according to any one of claims 14 to 16, wherein the slide (5) has in the direction towards the die (3) a tapering front side (7) with a flat front edge provided for the connecting lock with the die (3).

18. A moulding tool according to any one of claims 14 to 17, wherein the moulding tool core (2) has in addition a clamping face (4) for fixing a decorative sheet (9, 16) in at least one partial area provided for forming a decoration.

19. A moulding tool according to claim 18, wherein in the opened state of the moulding tool (1) the slide (5) projects so far beyond the clamping face (4) that sufficient space is available between the clamping face (4) and the rear side (6) of the slide (5) for the inlaying of a decorative sheet (9, 16).

20. A moulding tool according to any one of claims 14 to 19, wherein at least one of the areas of the moulding tool core provided for the formation of a decoration has a recess (11) in a continuous manner on its edge.

21. A moulding tool according to any one of claims 14 to 20, wherein the die (3) has webs (8) arranged in a manner corresponding to the slide (5).

## Revendications

1. Procédé de fabrication d'une pièce moulée ayant plusieurs zones de décoration (15, 18) différentes, adjacentes, à l'aide d'un outil de moulage (1) formé d'une matrice (3) et d'un noyau (2) par rétromoulage de plusieurs films décoratifs (9, 16), différents, placés dans l'outil de moulage (1), avec une matière thermoplastique (14, 14a),
procédé selon lequel :
a) on place les différents films décoratifs (9, 16) dans l'outil de moulage (1), ouvert,
b) les films décoratifs (9, 16) sont mis en position d'injection à l'aide d'un tiroir (5) intégré dans le noyau (2), et qui lorsque l'outil de moulage (1) est ouvert, dépasse de la surface du noyau de l'outil de moulage (2), en séparant le noyau en différentes zones partielles et des moyens pour entraîner des films décoratifs (9, 16), et
la liaison par la forme entre la matrice (3) et le tiroir (5), forme des cavités distinctes (13, 17) entre le noyau (2) et la matrice (3) pour les différentes zones de décoration (15, 18),
c) lorsque l'outil (1) est fermé, on effectue le rétromoulage tout d'abord du premier film décoratif (9) dans la première cavité (13), côté noyau, avec une matière thermoplastique (14),
procédé **caractérisé en ce qu'**
d) après le figeage de la première zone de décoration (15), on rétracte le tiroir (5) dans le noyau (2) et on supprime ainsi la séparation entre la zone de décoration (15) et la seconde cavité (17), et
e) ensuite on effectue le rétromoulage du second film décoratif (16) dans la seconde cavité (17) avec une matière thermoplastique (14a), les matières plastiques de thermoformage (14, 14a) se liant l'une à l'autre et formant une pièce moulée composite avec différentes zones de décoration (15, 18) adjacentes.

2. Procédé selon la revendication 1,
**caractérisé par**
un tiroir (5) ayant au moins un dos plat (6) réalisé comme moyen d'entraînement du film décoratif (9, 16).

3. Procédé selon la revendication 1,
**caractérisé en ce qu'**
on utilise un tiroir (5) ayant au moins une cavité latérale (23) comme moyen d'entraînement des films décoratifs (9, 16).

4. Procédé selon l'une des revendications 1 à 3,
**caractérisé en ce que**
le rétromoulage se fait par rétroinjection ou rétroexpansion.

5. Procédé selon l'une des revendications 1 à 4,
**caractérisé en ce qu'**
avant le rétromoulage, on fixe au moins un film décoratif (9, 16) sur une surface de tension (4) sur le côté du noyau de l'outil de moulage (1) et on bloque à l'aide de moyens de fixation (10).

6. Procédé selon l'une des revendications 1 à 5,
**caractérisé en ce qu'**
on met en place différents films décoratifs (9, 16) entre le noyau (2) et le tiroir (5), et à la fermeture de l'outil (1), les bords des films décoratifs (9, 16) sont enfoncés par le tiroir (5) dans des rainures (12) formées par des dégagements (11) entre le noyau (2) et le tiroir (5).

7. Procédé selon l'une des revendications 1 à 5,
**caractérisé en ce qu'**
on place le premier film décoratif (9) entre le noyau (2) et le tiroir (5) alors que le second film décoratif (16) est placé entre le tiroir (5) et la matrice (3) et à la fermeture de l'outil (1), il est pincé par son bord entre la matrice (3) et le tiroir (5),
- à la fermeture de l'outil le bord du premier film décoratif (9) est enfoncé par le tiroir (5) dans une rainure (12) constituée par un dégagement (11) du noyau (2), entre le noyau (2) et le tiroir (5), alors que le film décoratif (16) pincé entre le tiroir (5) et la matrice (3) reste en place.

8. Procédé selon l'une des revendications 1 à 7,
**caractérisé en ce que**
le tiroir (5) se ferme de manière indépendante.

9. Procédé selon l'une des revendications 1 à 7,
**caractérisé en ce que**
la fermeture du tiroir (5) se fait par la fermeture de l'outil (1), le tiroir (5) étant poussé par la matrice (3) en direction du noyau (2).

10. Procédé selon la revendication 9,
**caractérisé en ce que**
l'actionnement du tiroir (5) à la fermeture de l'outil (1) se fait par des entretoises (8) correspondant au tiroir (5), installées sur la matrice (3) et coopérant avec le tiroir (5).

11. Procédé selon l'une des revendications 1 à 10,
**caractérisé en ce qu'**
on utilise un tiroir (5) qui va en diminuant unilatéralement, sur son côté avant (7), et dans la première cavité (13) pour la zone de décoration (15), on développe un bord tourné vers l'arrière et qui lors du moulage par derrière réalise une zone de décoration (15) ayant un film décoratif (9) chevauchant le bord par un mouvement arrière.

12. Procédé selon l'une des revendications 1 à 11,
**caractérisé en ce que**
le film décoratif (9, 16) est un tissu, une matière décorative, un film de matière plastique, un tapis, du cuir, ou des imitations de cuir.

13. Procédé selon l'une des revendications 1 à 12,
**caractérisé en ce que**
la matière thermoplastique (14, 14a) est du polypropylène (PP), du polyéthylène (PE), du polyuréthane (PU), de l'acrylnitril-butadiène-styrène (ABS), de l'acrylnitril-butadiène-styrène/polycarbonate, comme copolymérisat (ABS-PC) ou polyamide (PA).

14. Outil de moulage (1) comportant une matrice (3) et un noyau (2), pour la mise en oeuvre d'un procédé selon l'une des revendications 1 à 13, pour fabriquer des pièces moulées ayant plusieurs zones de décoration, différentes, adjacentes,
le noyau (2) ayant plusieurs zones partielles séparées l'une de l'autre par le tiroir (5) intégré au noyau (2),
le tiroir (5) comportant des moyens pour entraîner les films décoratifs (9, 16) et dépassant de la surface du noyau lorsque l'outil de moulage (1) est en position ouverte,
dans lequel
- lorsque l'outil de moulage (1) est en position fermée, les cavités (13, 17) pour les zones de décoration (15, 18) sont séparées l'une de l'autre par la liaison par la forme entre le tiroir (5) et la matrice (3),
- entre le tiroir (5) et le noyau (2), sur au moins l'un des côtés du tiroir (5), une rainure (12) reçoit le bord d'au moins un film décoratif (9, 16),
- le tiroir (5) étant prévu pour être poussé complètement dans le noyau (2), et après le rétromoulage de la première zone de décoration par la fermeture du tiroir (5) dans le noyau de l'outil de moulage (2), on supprime la séparation entre les zones de décoration respectives (15, 18).

15. Outil de moulage selon la revendication 14,
dans lequel
le tiroir (5) comporte un dos (6) plat comme moyen pour entraîner des films décoratifs (9, 16), du côté du noyau.

16. Outil de moulage selon la revendication 14,
dans lequel
le tiroir (5) comporte au moins un dégagement latéral (23) comme moyen d'entraînement de films décoratifs (9, 16).

17. Outil de moulage selon l'une des revendications 14 à 16,
dans lequel
le tiroir (5) présente en direction de la matrice (3), un côté avant (7) allant en diminuant, avec un moyen de liaison avec l'arête avant plate de la matrice (3).

18. Outil de moulage selon l'une des revendications 14 à 17,
selon lequel
le noyau d'outil (2) comporte au moins une zone partielle pour développer un décor et en plus une surface de serrage (4) pour fixer un film décoratif (9, 16).

19. Outil de moulage selon la revendication 18,
selon lequel
à l'état ouvert de l'outil de moulage (1), le tiroir (5) dépasse suffisamment de la surface de serrage (4) par rapport à l'outil de montage (2) pour avoir suffisamment de place pour recevoir un film décoratif (9, 16) entre la surface de serrage (4) et le dos (6) du tiroir (5).

20. Outil de moulage selon l'une des revendications 14 à 19,
selon lequel
au moins l'une des zones pour réaliser un décor dans le noyau de l'outil de moulage, comporte une cavité (11), contournant le décor.

21. Outil de moulage selon l'une des revendications 14 à 20,
selon lequel
la matrice (3) comporte des entretoises (8) installées de manière à correspondre au tiroir (5).
